# EUROPEAN PATENT APPLICATION

(11) **EP 4 462 659 A1**
(43) Date of publication of application: **13.11.2024**
(21) Application number: 23172652.2
(22) Date of filing: 10.05.2023
(51) Int. Cl.: H02M 1/00, H02M 1/32, H02M 1/38, H02M 3/00, H02M 3/335, H02M 1/15, H02M 1/08

(54) **CONTROL OF A SWITCHED-MODE POWER SUPPLY**

(71) Applicant: Infineon Technologies Austria AG, 9500 Villach (AT)
(72) Inventor: PULLEN, Stephen, Olympia, 98516 (US); CLAVETTE, Danny, Greene, 02827 (US)
(74) Representative: Elkington and Fife LLP

(57) **Abstract**

A control circuit (100) is provided, for controlling switching elements of a switched-mode power supply (10). The control circuit includes a control input (112), for receiving a pulse width modulated, PWM, control signal comprising a series of control pulses. The control circuit has a primary output (120), for controlling a primary switching element of the switched-mode power supply. Also provided are: a synchronous rectifier module (SR) incorporating the control circuit (100); and a switched mode power supply incorporating the synchronous rectifier module (SR).

## Description

### FIELD OF THE INVENTION

This invention relates to switched-mode power supplies. In particular, it relates to control of switching elements in such power supplies.

### BACKGROUND OF THE INVENTION

In the past, many conventional switched-mode power supply (SMPS) topologies included a freewheel diode for rectification. In the field of DC-DC converters, for example, a canonical buck converter included a low-side freewheel diode that was forward biased and conducted current when a high-side switching element was turned off. A disadvantage of these conventional designs is that every diode has a non-negligible threshold voltage to turn it on and therefore generates significant conduction losses.

In many modern SMPS topologies, the conventional freewheel diode is replaced by an active, controlled switching element, to provide so-called synchronous rectification. The main advantage is that controlled switching elements, such as field effect transistors (FETs), can present a much lower voltage drop - and therefore much lower conduction loss - in the path of the switched current. However, this increased power efficiency comes at the cost of increased complexity, because at least one additional control signal must be generated, in order to control the controlled switch of the synchronous rectifier.

### SUMMARY OF THE INVENTION

According to one aspect, there is provided a control circuit for controlling switching elements of a switched-mode power supply, the control circuit comprising:
a control input, for receiving a pulse width modulated, PWM, control signal comprising a series of control pulses;
a primary output, for controlling a primary switching element of the switched-mode power supply; and
control logic configured to generate, based on the received PWM control signal, a primary PWM control signal, comprising a series of primary pulses, at the primary output,
wherein the primary PWM control signal is generated such that the primary pulses are timed between the control pulses.

The control circuit can function as an intermediary between a controller (e.g., a "main controller") of the switched mode power supply and the individual switching elements.

The primary PWM control signal may be generated such that there is one primary pulse in between each pair of successive control pulses. Each primary pulse may begin at or after the time instant when the preceding control pulse ends. Each primary pulse may end at or before the time instant when the following control pulse begins. In particular, each primary pulse may begin after the time instant when the preceding control pulse ends, and it may end at the time instant when the following control pulse begins.

The control circuit may further comprise a secondary output, for controlling a secondary switching element of the switched-mode power supply, wherein the control logic is further configured to generate, based on the received PWM control signal, a secondary PWM control signal at the secondary output, wherein the primary PWM control signal and the secondary PWM control signal are generated such that the primary switching element is controlled to be off if the secondary switching element is on, and the secondary switching element is controlled to be off if the primary switching element is on.

The secondary PWM control signal may comprise a series of secondary pulses. The secondary pulses may be timed between the primary pulses. There may be one secondary pulse between each pair of successive primary pulses. There may be one primary pulse between each pair of successive secondary pulses.

Each secondary pulse may correspond to a respective control pulse. Each secondary pulse may begin at or after the time instant when the control pulse begins. Each secondary pulse may end at or before the time instant when the control pulse ends. The duration of each secondary pulse is therefore less than or equal to the duration of the respective control pulse. In particular, each secondary pulse may begin after the time instant when the control pulse begins, and it may end at the time instant when the control pulse ends. (A pulse may begin with a leading edge and may end with a trailing edge.)

The control circuit may be configured to generate primary and secondary PWM control signals from a single input PWM control signal. This in turn means that the controller of the switched mode power supply only needs to provide this single PWM control signal to the control circuit. The controller can thus either be simplified (by reducing the number of control outputs), or else the same controller can be used to control more control circuits (and thereby switching elements) in parallel.

The controller of the switched mode power supply may be separate from and external to the control circuit. The control circuit may be co-located with at least one of the switching elements - for example, with the secondary switching element. The controller may be provided as a separate integrated circuit (IC) - that is, on a separate semiconductor die from the control circuit. Consequently, the control circuit may be configured to receive the PWM control signal via a trace on a circuit board or via a wire or cable. The control circuit and the controller may be implemented by two separate integrated circuits mounted to the circuit board, for example.

Exemplary control circuits according to the present disclosure enable some of the control logic for the switching elements to be distributed nearer to the switching elements. A signal path length carrying the PWM control signal from the controller to the control circuit may therefore be longer than a signal path length carrying one or both of the primary PWM control signal and the secondary PWM control signal from the control circuit to the respective switching elements.

The primary PWM control signal can be used to control the primary switching element and the secondary PWM control signal can be used to control the secondary switching element. The secondary switching element may be configured to operate as a synchronous rectifier.

The control logic may comprise inversion logic, configured to invert the PWM control signal to generate an inverted PWM control signal, wherein the primary PWM control signal is generated based on the inverted PWM control signal.

The inverted PWM control signal may comprise a series of pulses, each pulse having a leading edge and a trailing edge, and wherein the control logic comprises primary delay logic, configured to delay the leading edge of each pulse in the inverted PWM control signal by a defined primary delay time, thereby to generate the primary pulses.

The delay to the leading edge of the primary pulse may help to ensure that the secondary switching element is switched off before the primary switching element switches on.

The primary delay logic might not delay the trailing edge of the inverted pulses.

Each control pulse of the PWM control signal may have a leading edge and a trailing edge, wherein the secondary PWM control signal comprises a series of secondary pulses, each secondary pulse corresponding to a respective control pulse, and wherein the control logic comprises secondary delay logic, configured to delay the leading edge of each control pulse in the PWM control signal by a defined secondary delay time, thereby to generate the secondary pulses.

The delay to the leading edge of the secondary pulse may help to ensure that the primary switching element is switched off before the secondary switching element switches on, by creating an intentional dead time between these two events.

The secondary delay logic might not delay the trailing edge of the pulses.

In some alternative examples, the primary PWM control signal may be generated based on a non-inverted version of the received PWM control signal. In this case, the primary delay logic may be configured to delay the leading edge of each control pulse in the PWM control signal by the defined primary delay time, thereby to generate the respective primary pulse.

Conversely, the secondary PWM control signal may be generated based on an inverted version of the received PWM control signal. The inversion logic may be configured to invert the PWM control signal to generate the inverted PWM control signal, wherein the secondary PWM control signal is generated based on the inverted PWM control signal.

The inverted PWM control signal may comprise a series of pulses, each pulse having a leading edge and a trailing edge, wherein the control logic comprises secondary delay logic, configured to delay the leading edge of each pulse in the inverted PWM control signal by a defined secondary delay time, thereby to generate the respective secondary pulse.

The control circuit may comprise a sensing terminal configured to sense an electrical characteristic, wherein the control logic is configured to set one or both of the primary delay time and the secondary delay time responsive to the sensed electrical characteristic.

The sensed electrical characteristic may be, for example a voltage at the sensing terminal, an impedance seen at the sensing terminal, and a current flowing via the sensing terminal.

The control logic may be configured to set the primary delay time and/or the secondary delay time upon initialisation of the control circuit, and to maintain them fixed during operation of the control circuit. (In other words, even if the electrical characteristic observed at the sensing terminal changes during operation of the control circuit, the delay times do not change.)

The control circuit may comprise a sensing circuit configured to sense the electrical characteristic at the sensing terminal. The sensing circuit may comprise a current driver.

The control circuit may further comprise an over-current protection, OCP, circuit, configured to sense a current switched by the primary switching element, wherein the OCP circuit is configured to detect an excessive current condition in which the sensed current exceeds a current protection threshold, wherein the control logic is configured to reduce a pulse width of the primary PWM control signal, responsive to the detection of said excessive current condition.

Alternatively or in addition, the OCP circuit may be configured to sense a current switched by the secondary switching element, wherein the control logic is configured to reduce a pulse width of at least one of the primary PWM control signal and the secondary PWM control signal, responsive to the detection of said excessive current condition.

In some examples, the control logic may be configured to stop generating the primary pulses and/or the secondary pulses, in response to detection of switched current exceeding the current protection threshold. (This can be seen as reducing the respective pulse width to zero.) In this way, the control logic may be configured to shut down one or both of the primary switching element and the secondary switching element in response to detection of switched current exceeding the current protection threshold.

The control circuit may comprise an OCP terminal, wherein the control circuit is configured to provide an output signal at the OCP terminal indicative of the detection of said excessive current condition.

The OCP terminal may facilitate the use of the control circuit in a switched mode power supply comprising multiple switching elements (for example, in a parallel arrangement). When an excessive current condition is detected, the control circuit can signal this to other control circuits controlling other switching elements. The control of all of these switching elements can then be adapted in response to detection of an excessive current condition in one of them. This can facilitate a fast response to a detected excessive current condition, helping to protect the components of the switch mode power supply and/or connected components external to the power supply.

The control circuit may be configured to receive at the OCP terminal an input signal indicative of an excessive current event, wherein the control logic is configured to reduce a pulse width of at least one of the primary PWM control signal and the secondary PWM control signal, responsive to said received input signal.

The excessive current event may relate to an excessive current condition detected by another control circuit, associated with one or more other switching elements of the switched mode power supply.

For example, the OCP terminal may be pulled low when an excessive current condition is detected in any of a plurality of control circuits coupled together at their OCP terminals. In this way, the coupled OCP terminals operate in the manner of a signal/data bus. The control circuits of the plurality may be identical.

The OCP terminal may be a sensing/OCP terminal configured to sense an electrical characteristic upon initialisation of the control circuit, wherein the control logic comprises inversion logic, configured to invert the PWM control signal to generate an inverted PWM control signal, wherein the primary PWM control signal is generated based on the inverted PWM control signal, wherein the inverted PWM control signal comprises a series of pulses, each pulse having a leading edge and a trailing edge, and wherein the control logic comprises primary delay logic, configured to delay the leading edge of each pulse in the inverted PWM control signal by a defined primary delay time, thereby to generate the primary pulses, wherein the control logic is configured to set the primary delay time responsive to the sensed electrical characteristic, and wherein, after said initialisation, the control circuit is configured to provide a signal at the sensing/OCP terminal indicative of the detection of said excessive current condition.

Alternatively or in addition, the control logic may be configured to set the secondary delay time (as summarised previously above) responsive to the sensed electrical characteristic.

According to such an arrangement, the sensing terminal and the OCP output can be provided by the same terminal. This can help to reduce the number of input and output terminals of the control circuit (and optionally also of a module comprising the control circuit).

Also provided is a synchronous rectifier module comprising:
a controlled switching element, having a control terminal; and
a control circuit as summarised above,
wherein the secondary output of the control circuit is coupled to control the control terminal of the controlled switching element.

The controlled switching element may act as the secondary switching element mentioned above. The controlled switching element may comprise or consist of one or more field effect transistors (FETs). The (or each) FET may be configured to operate as a synchronous rectifier. The control terminal of a FET may be the gate. The switched current may flow between the source and drain of the FET.

The controlled switching element may comprise or consist of one or more gallium nitride (GaN) transistors, such as GaN FETs or GaN high electron mobility transistors (HEMTs). The (or each) GaN transistor may be configured to operate as a synchronous rectifier.

The above-summarised synchronous rectifier module may provide a "smart" synchronous rectifier, in that it may be configured to produce the PWM control signals needed by switching elements based on a reduced number of PWM control signals (in examples, just one PWM control signal) from the main controller. The synchronous rectifier module summarised above may therefore no longer be entirely dependent on the main controller for intelligent control of the switching elements.

Where there are multiple FETs (or, respectively, GaN transistors), they may be connected to switch currents in parallel. All of these parallel FETs or GaN transistors may be controlled by the secondary PWM control signal received from the secondary output of the control circuit. That is, the secondary output of the control circuit may be coupled to control the control terminal (gate) of each FET (or GaN transistor). This increases the maximum current that can be switched by the synchronous rectifier module, while avoiding a significant increase in I²R losses.

The secondary output of the control circuit may be connected to the control terminal of the controlled switching element. Alternatively, it may be connected to a driver circuit that is coupled to the control terminal. The driver circuit may be a gate driver circuit, for example. The synchronous rectifier module may comprise the driver circuit.

For the avoidance of doubt, the control circuit may be a control circuit according to any claim dependent on claim 2, or any similar control circuit summarised above.

The controlled switching element and the control circuit may be packaged together in a common package. Suitable package types for the package may include but are not limited to: a through-hole package; a surface mount package; a chip carrier; a flat package (for example, a quad flat package); a pin grid array; and a ball grid array.

The controlled switching element and the control circuit may be formed monolithically. That is, they may be integrated in the same semiconductor die.

The primary PWM control signal may be provided at an output of the package. According to this arrangement, the secondary switching element is integrated with the control circuit in the package, while the primary switching element is provided externally to the package. In other words, the controlled (secondary) switching element and the control circuit may be packaged separately from (and/or may be formed in a different semiconductor die from) the primary switching element.

Further provided is a switched mode power supply comprising:
a first synchronous rectifier module as summarised above; and
a controller configured to provide a first PWM control signal to the first synchronous rectifier module.

The controller may also be referred to as the "main controller". The controller and the first synchronous rectifier module may be provided in discrete (i.e., separate) semiconductor dies. In some examples, the controller and the first synchronous rectifier module may be packaged together in a common package. In other examples, the controller and the first synchronous rectifier module may be packaged separately - i.e., in discrete packages.

The switched mode power supply may further comprise a second synchronous rectifier module as summarised above, wherein the controller is further configured to provide a second PWM control signal to the second synchronous rectifier module.

The controller may be configured to provide only the first and second PWM control signals (and no other PWM control signals) to the first and second synchronous rectifier modules, respectively.

The switched mode power supply may have a buck-derived topology.

The switched mode power supply may be a DC-DC converter, in particular.

The switched mode power supply may further comprise: a first primary switching element; and a second primary switching element, wherein the primary PWM control signal of the first synchronous rectifier module is coupled to control a control terminal of the first primary switching element and the primary PWM control signal of the second synchronous rectifier module is coupled to control a control terminal of the second primary switching element.

Each primary switching element may comprise one or more FETs. Each primary switching element may comprise one or more GaN transistors (such as GaN FETs).

The switched mode power supply may further comprise: a first primary switching element; a second primary switching element; a third synchronous rectifier module as summarised above; and a fourth synchronous rectifier module as summarised above, wherein the controller is configured to provide the first PWM control signal to the fourth synchronous rectifier module and the second PWM control signal to the third synchronous rectifier module, wherein the primary PWM control signal of one of the first synchronous rectifier module and the fourth synchronous rectifier module is coupled to control a control terminal of the first primary switching element and the primary PWM control signal of one of the second synchronous rectifier module and the third synchronous rectifier module is coupled to control a control terminal of the second primary switching element.

This may mean that the primary PWM control signals of two of the synchronous rectifier modules are unused. There may be some redundancy here, in that the first and fourth synchronous rectifier modules produce essentially identical primary PWM control signals, yet only one of them might be used. Likewise, the second and third synchronous rectifier modules produce essentially identical primary PWM control signals, yet only one of them might be used. However, any perceived disadvantage entailed by this slight redundancy is outweighed by the benefits of modular design. In other words, the slight redundancy may be the price paid for being able to use identical synchronous rectifier modules in all four instances.

The switched mode power supply may further comprise a first transformer, wherein: the first primary switching element and the second primary switching element are connected in series at a switching node; the switching node is coupled to a primary winding of the first transformer; the first synchronous rectifier module is coupled to a first end of a secondary winding of the first transformer; the second synchronous rectifier module is coupled to a second end of the secondary winding of the first transformer; and the secondary winding of the first transformer has a centre tap, configured to be coupled to a load.

The switched mode power supply may further comprise a first transformer and a second transformer, wherein: the first primary switching element and the second primary switching element are connected in series at a switching node; the switching node is coupled to a primary winding of the first transformer; a primary winding of the second transformer is in series with the primary winding of the first transformer; the first synchronous rectifier module is coupled to a first end of a secondary winding of the first transformer; the second synchronous rectifier module is coupled to a second end of the secondary winding of the first transformer; and the secondary winding of the first transformer has a centre tap, configured to be coupled to a load, the fourth synchronous rectifier module is coupled to a first end of a secondary winding of the second transformer; the third synchronous rectifier module is coupled to a second end of the secondary winding of the second transformer; and the secondary winding of the second transformer has a centre tap, coupled to the centre tap of the first transformer.

The first and second transformers may have the same turns ratio. In each transformer, the secondary winding may have fewer turns than the primary winding, in order to step down the voltage and step up the current.

The controller may be configured to generate the first PWM control signal and the second PWM control signal with a 180° phase-shift between them.

The switched mode power supply may form a half bridge current doubler, HBCD, circuit.

The switched mode power supply may comprise a plurality of such HBCD circuits. The controller may be configured to generate a respective pair of PWM control signals for each HBCD circuit. Each pair of PWM control signals may be 180° out of phase with one another. The controller may be configured to generate the pairs of PWM control signals such that each pair has a different phase from the other pairs. This may help to reduce a current ripple seen by the load.

In other examples, the switched mode power supply may form a full bridge current doubler circuit.

### BRIEF DESCRIPTION OF THE DRAWINGS

The invention will now be described by way of example with reference to the accompanying drawings, in which:
Fig. 1 is a simplified circuit diagram showing a half-bridge current doubler (HBCD) DC-DC converter according to an example;
Fig. 2 is a timing diagram showing pulse width modulated (PWM) control signals suitable for the DC-DC converter of Fig. 1;
Fig. 3 is a block diagram showing an SMPS according to an example; and
Fig. 4 is a block diagram illustrating a synchronous rectifier module according to an example.

It should be noted that these figures are diagrammatic and not drawn to scale. Relative dimensions and proportions of parts of these figures have been shown exaggerated or reduced in size, for the sake of clarity and convenience in the drawings.

### DETAILED DESCRIPTION

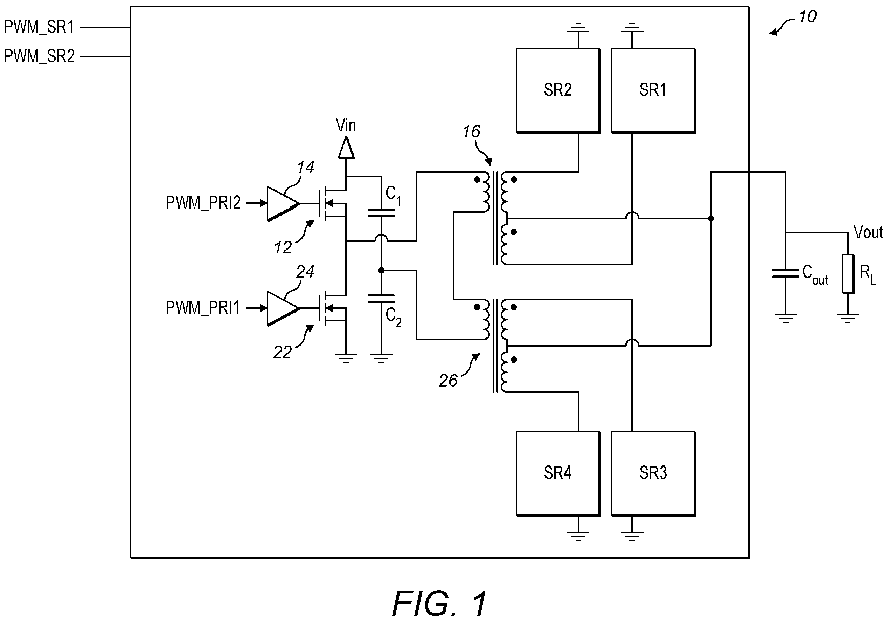

Fig. 1 shows a DC-DC converter according to an example. In this example, the DC-DC converter comprises a HBCD circuit 10 with a buck-derived topology. It should be understood that this topology is used by way of example. Although it may represent a particularly advantageous example, the scope of the present disclosure is not limited to this example.

The HBCD circuit 10 comprises two primary switching elements: a first primary switching element 22 and a second primary switching element 12. According to the present example, each primary switching element is a GaN FET. The primary switching elements are connected in series between a power supply voltage Vin and a ground. In particular, the drain of the first primary switching element 22 is connected to the source of the second primary switching element 12 at a switching node. The gate of the first primary switching element 22 is driven by a driver 24, and the gate of the second primary switching element 12 is driven by a driver 14. Each driver receives at its input a respective primary PWM control signal that controls the respective primary switching element.

The switching node is connected to the primary winding of a first transformer 16. This is connected (in series) to the primary winding of a second transformer 26. The other end of the primary winding of the second transformer 26 is connected to the midpoint of a capacitive bridge. The capacitive bridge is formed by two capacitors C₁ and C₂, which are connected in series between the supply voltage Vᵢₙ and ground.

Each transformer 16, 26 has a secondary winding with a centre tap. These two centre taps are connected to an output node of the HBCD circuit. A smoothing capacitor Cₒᵤₜ is provided between the output node and ground. The output node is connected to a load R_{L}, which is supplied with DC power by the SMPS.

Each end of the secondary winding of the first transformer 16 is coupled to ground via a respective synchronous rectifier module SR1, SR2. Likewise, each end of the secondary winding of the second transformer 26 is coupled to ground via a respective synchronous rectifier module SR4, SR3.

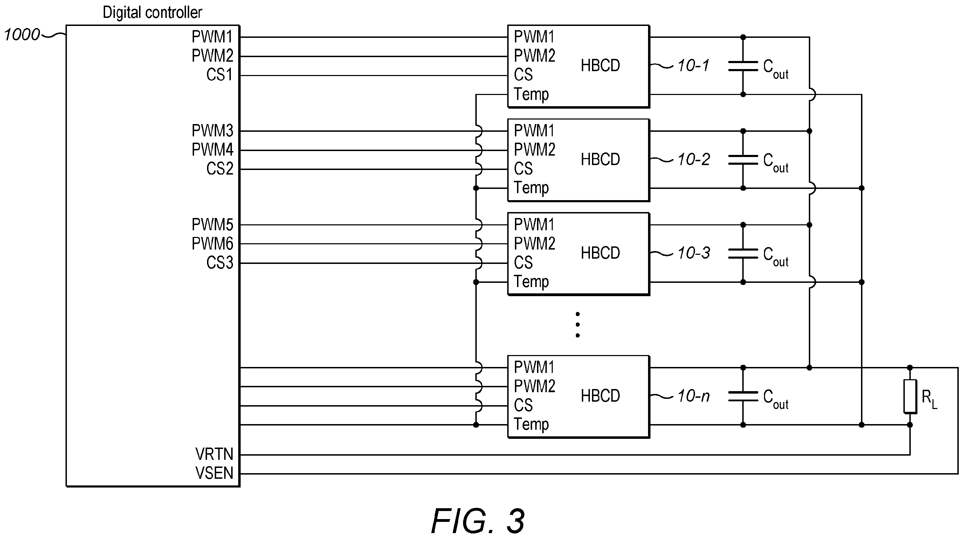

PWM control signals for the HBCD circuit 10 are provided by a digital controller 1000 (not shown in Fig. 1 but shown in Fig. 3). According to a comparative example, the digital controller would need to provide four PWM control signals to control the switching elements of the HBCD circuit - one each for the two synchronous rectifier modules SR1 and SR2, and one each for the two primary switching elements 22 and 12. Note that the synchronous rectifier modules SR4 and SR3, connected to the second transformer 26, are connected in parallel to the synchronous rectifier modules SR1 and SR2, respectively. Therefore, SR4 can be controlled by the same control signal as SR1, and SR3 can be controlled by the same control signal as SR2.

In order to increase the power handling capacity of the SMPS, it may be advantageous to connect several identical HBCD circuits 10 to the load R_{L} in parallel. The amount of current that can be provided to the load is linearly related to the number of parallel HBCD circuits. However, according to the comparative example described above, each HBCD circuit 10 will require four control signals from the controller 1000. This limits the number of HBCD circuits 10 that can be controlled by a single controller, and thereby limits the current (and therefore power) output of the SMPS. According to one example, the controller 1000 may be capable of generating 16 phases of PWM control signal at respective outputs. This controller would be capable of controlling at most four of the HBCD circuits 10, according to the comparative example.

The present inventors have recognised that the number of control signals required from the controller 1000 can be reduced by providing control logic locally in each synchronous rectifier SR1, SR2, SR3, SR4. The local control logic can generate multiple control signals from each control signal received from the controller 1000.

In particular, the first synchronous rectifier SR1 receives a first PWM control signal from the controller 1000 and uses this to generate control signals both for the first synchronous rectifier itself and for the first primary switching element 22. Meanwhile, the second synchronous rectifier SR2 receives a second PWM control signal from the controller 1000 and uses this to generate control signals both for the second synchronous rectifier itself and for the second primary switching element 12. In this way, the HBCD circuit 10 can be controlled by just two PWM control signals generated by the controller 1000 (instead of four such signals). This reduces the burden on the controller by half. Or, to put it another way, the same controller 1000 can now control twice as many HBCD circuits 10 as it could in the comparative example. This means that the same controller can control an SMPS with twice the current output (compared with the control strategy of the comparative example).

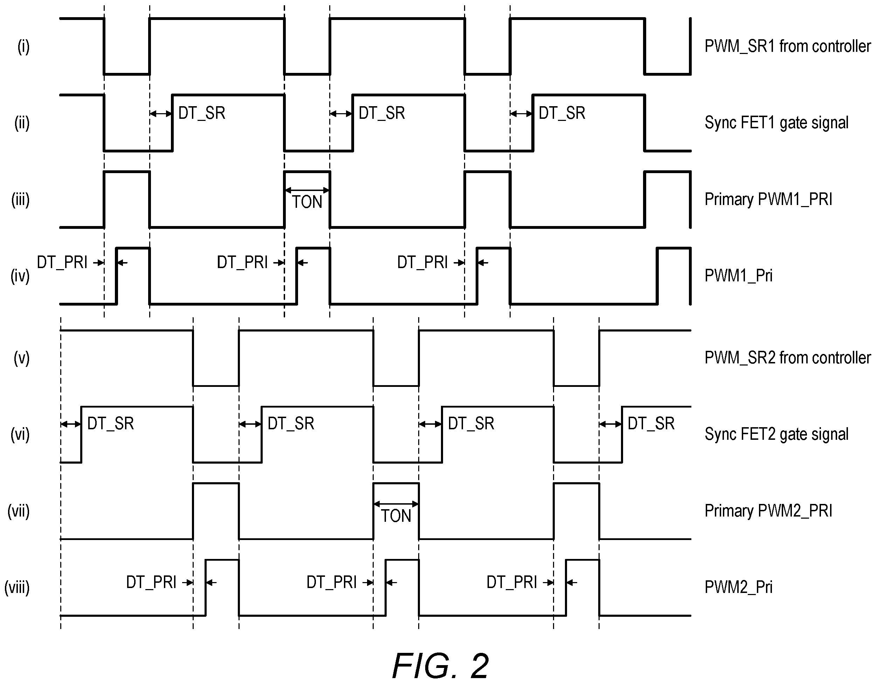

Fig. 2 shows the timing of the control signals according to an example. Rows (i) to (iv) show signals associated with the first synchronous rectifier SR1. Row (i) shows the first PWM control signal, PWM_SR1, which is provided by the controller 1000 to the first synchronous rectifier SR1. Row (ii) shows a secondary PWM control signal that is generated by control logic in the first synchronous rectifier SR1. This secondary PWM control signal is used to control a secondary switching element in the first synchronous rectifier SR1. As shown in the timing diagram, one pulse is generated in the secondary PWM control signal for each pulse in the first PWM control signal, PWM_SR1. However, the leading (rising) edge of each pulse in the secondary PWM control signal is delayed by a secondary delay time DT_SR, compared with the leading (rising) edge of the corresponding pulse in the first PWM control signal.

Row (iii) shows an inverted PWM control signal PWM1_PRI, which is generated by the control logic in the first synchronous rectifier SR1. This inverted PWM control signal PWM1_PRI is generated by inverting the first PWM control signal shown in row (i). Row (iv) shows a primary PWM control signal PWM1_Pri that is generated by the control logic in the first synchronous rectifier SR1. As shown, one pulse is generated in the primary PWM control signal PWM1_Pri for each pulse in the inverted PWM control signal PWM1_PRI. However, the leading (rising) edge of each pulse in the primary PWM control signal PWM1_Pri is delayed by a primary delay time DT_PRI, compared with the leading (rising) edge of the corresponding pulse in the inverted PWM control signal PWM1_PRI. Referring back to the example of Fig. 1, the primary PWM control signal PWM1_Pri is used to control the first primary switching element 22 of the HBCD circuit 10.

Rows (v) to (viii) show control signals associated with the second synchronous rectifier SR2. Row (v) shows the second PWM control signal, PWM_SR2, which is provided by the controller 1000 to the second synchronous rectifier SR2. Note that the first PWM control signal, PWM_SR1, and the second PWM control signal, PWM_SR2, are 180° out of phase.

Row (vi) shows a secondary PWM control signal that is generated by control logic in the second synchronous rectifier SR2. This secondary PWM control signal is used to control a secondary switching element in the second synchronous rectifier SR2. As shown in the timing diagram, one pulse is generated in the secondary PWM control signal for each pulse in the second PWM control signal, PWM_SR2. However, the leading (rising) edge of each pulse in the secondary PWM control signal is delayed by the secondary delay time DT_SR, compared with the leading (rising) edge of the corresponding pulse in the second PWM control signal PWM_SR2.

Row (vii) shows an inverted PWM control signal PWM2_PRI, which is generated by the control logic in the second synchronous rectifier SR2. This inverted PWM control signal PWM2_PRI is generated by inverting the second PWM control signal shown in row (v). Row (viii) shows a primary PWM control signal PWM2_Pri that is generated by the control logic in the second synchronous rectifier SR2. As shown, one pulse is generated in the primary PWM control signal PWM2_Pri for each pulse in the inverted PWM control signal PWM2_PRI. However, the leading (rising) edge of each pulse in the primary PWM control signal PWM2_Pri is delayed by the primary delay time DT_PRI, compared with the leading (rising) edge of the corresponding pulse in the inverted PWM control signal PWM2_PRI. Referring back to the example of Fig. 1, the primary PWM control signal PWM2_Pri is used to control the second primary switching element 12 of the HBCD circuit 10.

In the present example, all four synchronous rectifiers SR1-4 are identical in their internal structure and functioning. The fourth synchronous rectifier SR4 receives the same (first) PWM control signal PWM_SR1 from the controller 1000 as that received by the first synchronous rectifier SR1. It generates a primary PWM control signal that is substantially identical to the primary PWM control signal PWM1_Pri generated by the first synchronous rectifier SR1. Likewise, it generates a secondary PWM control signal that is substantially identical to the secondary PWM control signal generated by the first synchronous rectifier SR1. The secondary PWM control signal is used to control the secondary switching element of the fourth synchronous rectifier SR4. However, the primary PWM control signal generated by the fourth synchronous rectifier is unused. (Only one of the primary PWM control signals generated by the first and fourth synchronous rectifiers is needed to control the first primary switching element.)

The third synchronous rectifier SR3 receives the same (second) PWM control signal PWM_SR2 from the controller 1000 as that received by the second synchronous rectifier SR2. It generates a primary PWM control signal that is substantially identical to the primary PWM control signal PWM2_Pri generated by the second synchronous rectifier SR2. Likewise, it generates a secondary PWM control signal that is substantially identical to the secondary PWM control signal generated by the second synchronous rectifier SR2. The secondary PWM control signal is used to control the secondary switching element of the third synchronous rectifier SR3. However, the primary PWM control signal generated by the third synchronous rectifier is unused. (Only one of the primary PWM control signals generated by the second and third synchronous rectifiers is needed to control the second primary switching element.)

With this set of control signals, the first primary switching element 22 and the second primary switching element 12 are switched on for nonoverlapping periods that are 180° out of phase, by the pulses in the first primary control signal PWM1_Pri and the second primary control signal PWM2_Pri, respectively. This sets up an alternating current flow through the primary windings of the first and second transformers 16 and 26. The alternating current is rectified on the secondary side, to supply the load with a DC current.

In one half-cycle, with the second primary switching element 12 switched on (see row (viii) in Fig. 2: PWM2_Pri), half of the current to the load flows through one half of the secondary winding of the first transformer 16 and through the first synchronous rectifier SR1, whose secondary switching element is also switched on at this time - see row (ii). Likewise, the other half of the current to the load flows through one half of the secondary winding of the second transformer 26 and through the fourth synchronous rectifier SR4.

In the other half-cycle, with the first primary switching element 22 switched on (see row (iv) in Fig. 2: PWM1_Pri), half of the current to the load flows through the other half of the secondary winding of the first transformer 16 and through the second synchronous rectifier SR2, whose secondary switching element is also switched on at this time - see row (vi). Likewise, the other half of the current to the load flows through the other half of the secondary winding of the second transformer 26 and through the third synchronous rectifier SR3.

The timings of the PWM control signals are set by the main controller such that the two primary switching elements are never switched on at the same time (avoiding shoot-through current at the primary side). The primary and secondary PWM control signals, generated by each synchronous rectifier, are timed so that there is a dead time after the end of each primary pulse, before the next secondary pulse. Likewise, there is a dead time after the end of each secondary pulse before the next primary pulse. This ensures, for example, that the secondary switching element in the first synchronous rectifier SR1 switches off a short time before the first primary switching element 22 switches on, and that the secondary switching element in the second synchronous rectifier SR2 switches off a short time before the second primary switching element 12 switches on. The first and second synchronous rectifiers SR1 and SR2 (and likewise the third and fourth synchronous rectifiers SR3 and SR4) are switched on overlapping time intervals; however, the timing of the overlap is such that both synchronous rectifiers are switched on only during the period when neither of the primary switching elements is switched on.

Fig. 3 is a block diagram of an SMPS showing several HBCD modules 10-1 to 10-n connected in parallel to drive a load R_{L}. All the HBCD modules are controlled by the same digital controller 1000. To minimise ripple, the PWM control signals for the various HBCD modules 10-1 to 10-n are generated by the controller 1000 with incremental phase delays between them. For example, in the case of 8 HBCD modules, the relative phase delays between the first PWM control signals for the respective HBCD modules may be set at 0°, 22.5°, 45°, 67.5°, 90°, 112.5°, 135°, and 157.5° (i.e., increments of 180°÷8).

Each HBCD module generates a temperature output (Temp). These outputs are tied together and received by the controller 1000. This can be used for over-temperature protection Each HBCD module generates a current sense (CS) output, which is received by the controller 1000. This can be used for overcurrent protection and/or for closed loop feedback control of the PWM control signals. The controller also has a voltage sensing input (VSEN), which is coupled to the load R_{L}. This can be used for over-voltage protection and/or for closed loop feedback control of the PWM control signals.

In the present example, the digital controller 1000 and the HBCD modules 10-1 to 10-n are provided on the same printed circuit board. The connections between the digital controller 1000 and each HBCD module 10 are provided by conductive traces on the printed circuit board. (Of course, it should be appreciated that other constructions are possible, and the connections may be provided in other ways.) Since the digital controller is provided separately from the HBCD modules, in the present example, the signal path length for control signals between the controller 1000 and each HBCD module 10 is considerably longer than the internal signal paths inside each HBCD module 10 (and longer especially compared with those inside each synchronous rectifier SR1 to SR4).

In the present example, the SMPS (and each HBCD module), is designed to step down voltage from a DC supply voltage of 48 V and to step up current to supply of the order of 300 A of current to the load R_{L}. Such an SMPS may be useful for powering a microprocessor, for example. However, examples according to the present disclosure are by no means restricted to this application.

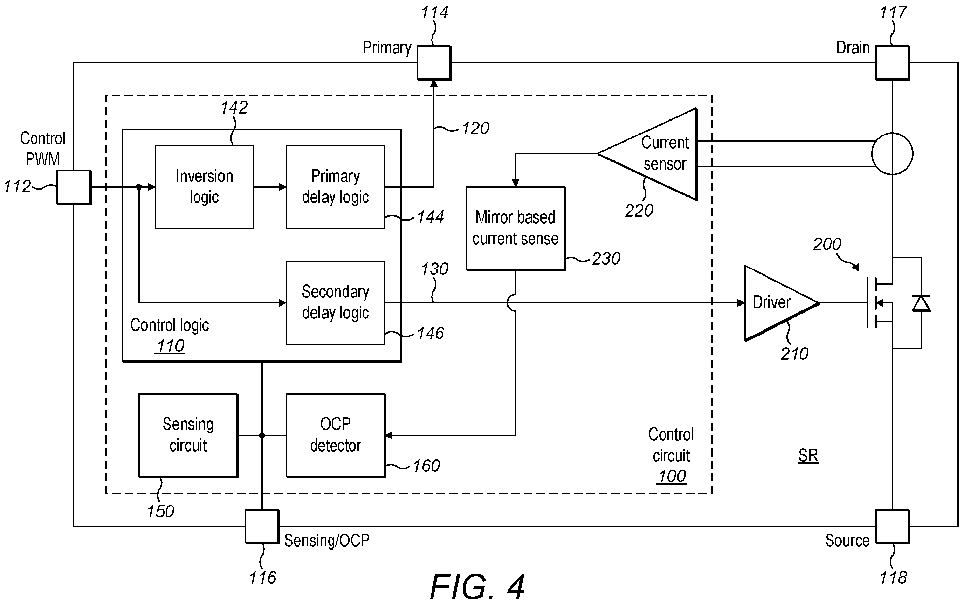

Fig. 4 is a block diagram showing an exemplary implementation of a synchronous rectifier module SR. This module is suitable for providing each of the four synchronous rectifiers SR1 to SR4 in the DC-DC converter of Fig. 1, for example (along with many other possible SMPS circuits).

The synchronous rectifier module comprises a controlled switching element 200, which acts as a secondary switching element in the exemplary circuit of Fig. 1. In this example, the secondary switching element is a FET - specifically, a GaN FET. The module comprises a driver 210 connected to the control terminal (i.e., the gate) of the controlled switching element 200 (i.e., the FET).

The module also comprises a control circuit 100, configured to control the secondary switching element and also configured to control a primary switching element that is not part of the module. The control circuit 100 comprises control logic 110 configured to produce control signals for the controlled switching element 200 and the (separate) primary switching element.

In the present example, the controlled switching element 200, the driver 210, and the control circuit 100 are all implemented monolithically (that is, in the same semiconductor die). Accordingly, they are all packaged in the same integrated circuit (IC) package. It should be understood that it is not essential for all of the components mentioned to be implemented monolithically. The synchronous rectifier module could comprise one discrete die implementing the controlled switching element 200 and another discrete die implementing the control circuit 100 and the driver 210. It is not essential that such discrete dies be packaged together in a common package; however, it may be advantageous to package them in this way, since this provides a single packaged circuit component that can be integrated easily into an SMPS circuit design.

The control logic 110 is responsible for generating the control signals described above with reference to Fig. 2.

The control logic 110 comprises inversion logic 142, configured to invert the PWM control signal received from the controller 1000 (see rows (i) and (iii) in Fig. 2, for example). The control logic 110 further comprises primary delay logic 144, configured to delay the leading edge of each pulse in the inverted PWM control signal, and thereby to generate the primary PWM control signal (see rows (iii) and (iv) in Fig. 2, for example). Additionally, the control logic comprises secondary delay logic 146, configured to delay the leading edge of each pulse in the PWM control signal received from the controller 1000, and thereby to generate the secondary PWM control signal.

The terminals (e.g., pins) of the synchronous rectifier module SR will now be described. The PWM control signal from the controller 1000 is received at a control PWM terminal 112 of the packaged synchronous rectifier module. From there, it is coupled (internally in the module) to the control logic 110. The primary PWM control signal is provided at a primary output of the control circuit 100. From there it is provided to a primary output terminal 114 of the packaged synchronous rectifier module. The secondary PWM control signal is provided at a secondary output of the control circuit 100. From there, it is coupled (internally in the module) to the driver 210, for controlling the secondary switching element. The switched current flows between terminals 117 and 118 of the packaged synchronous rectifier module. In the present example (using a FET as the switching element), the source of the FET is connected to the terminal 118, and the drain of the FET is connected to the terminal 117.

The packaged synchronous rectifier module SR has at least one further external terminal - namely, a sensing/OCP terminal 116. This has a dual purpose: firstly, it is used to set the primary and secondary delay times DT_PRI and DT_SR, when the synchronous rectifier module is initialised; and, secondly, during normal operation, it is used for signalling for overcurrent protection (OCP).

As mentioned, the first function is only performed at start-up. The delay times are set by connecting a resistor of specified resistance to the sensing/OCP port. When the synchronous rectifier module boots up, a sensing circuit 150, comprising a current driver (not shown), drives a current through the connected resistance. By sensing the voltage at the terminal 116 while this (known) current is flowing, the sensing circuit can measure the resistance. The control circuit then sets the delay times according to which of a number of predefined resistance-ranges the measured resistance falls inside. In this way, a designer of a SMPS circuit can access different delay times simply by an appropriate choice of the resistance coupled to the terminal 116.

The other function of the sensing/OCP terminal 116 comes into operation after the initial boot-up phase. The synchronous rectifier module SR is designed to be used alongside other instances of the same module. All instances of the synchronous rectifier module are coupled together at their sensing/OCP terminals 116. This connection is used as a communications bus between the modules, to signal overcurrent conditions. The overcurrent conditions can be determined in various ways. In the present example, the control circuit 100 of each synchronous rectifier module SR includes a current sensor 220, arranged to sense the switched current flowing through the (secondary) controlled switching element 200 (that is, the FET in Fig. 4). The output of the current sensor is coupled to the input of a mirror-based current sensing circuit 230, which determines an amplitude of the current. The amplitude signal is provided to an OCP detector 160. The OCP detector 160 compares the amplitude signal with a predetermined threshold to determine whether an excessive current condition has occurred. The excessive current condition may be determined by the OCP detector when the current sensed by the current sensor 220 exceeds the predetermined safe threshold level for a predetermined time-duration (or longer).

When the OCP detector 160 of any of the linked synchronous rectifier modules determines that an excessive current condition has occurred, it signals this via the sensing/OCP terminal 116 (for example, by pulling the terminal low). This allows the control circuit of each synchronous rectifier module SR to take mitigating actions quickly. For example, the control logic 110 can increase the delay times applied by the primary delay logic 144 and/or the secondary delay logic 146, to reduce the pulse width of the primary PWM control signal and/or the secondary PWM control signal, respectively. In some cases, the relevant pulse widths may be reduced to zero, thereby shutting off the primary and/or secondary switching element. In this way, the overcurrent protection function of the synchronous rectifier module can override the PWM control signals received from the main controller 1000, to quickly react to fault conditions. This can help to protect both the components of the SMPS and those of the connected load.

It should be noted that the above-mentioned embodiments illustrate rather than limit the invention, and that those skilled in the art will be able to design many alternative embodiments without departing from the scope of the appended claims.

In the present implementation of the example of Fig. 4, the control logic is implemented as digital circuitry. However, in other examples, or other implementations of the example of Fig. 4, the control logic may instead be implemented using analog circuits. Those skilled in the art will be familiar with ways of implementing inversion and delay of control signals for example, using either analogue or digital processing, or a mixture of both.

In the example of Fig. 4, a dual function sensing/OCP terminal 116 was used. However, in other examples, the sensing terminal may be separate from the OCP terminal.

The diagram of Fig. 4 shows a single controlled switching element 200 (namely, a GaN FET), for simplicity. However, it may be advantageous to provide multiple controlled switching elements with their main current flow paths arranged in parallel. For example, two or more FETs could be provided, with their source-drain channels connected in parallel. In some cases, the parallel connection may be provided internally in the synchronous rectifier module. However, it may be advantageous to provide separate pairs of terminals (e.g., separate pairs of source and drain terminals) for each separate controlled switching element. Each of the multiple controlled switching elements may be controlled by the secondary PWM control signal produced at the secondary output 130 of the control circuit 100.

By providing multiple controlled switching elements (and optionally separate pairs of terminals), the current-handling capacity of the synchronous rectifier module can be increased. This is particularly useful when - as in the example of Fig. 1 - the voltage is stepped down and the current is stepped up at the secondary side of the transformers 16, 26.

Fig. 1 showed a half-bridge current doubler topology. As mentioned already, the scope of the present disclosure is not limited to this example. It should be understood that the concepts described could be applied to various other DC-DC converter topologies - including other buck derived topologies. A full bridge current doubler converter could be constructed as a variant of the circuit shown in Fig. 1. In the full bridge converter, the capacitors C₁ and C₂ would be replaced by controlled switching elements. The switching element replacing the first capacitor C₁ would be operated in phase with the first primary switching element 22; the switching element replacing the second capacitor C₂ would be operated in phase with the second primary switching element 12. The control signals for the additional switching elements could be generated by control circuits in one or more of the synchronous rectifier modules, or by the main controller.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used to advantage. Furthermore in the appended claims lists comprising "at least one of: A; B; and C" should be interpreted as (A and/or B) and/or C.

Embodiments as discussed herein may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The following embodiments are disclosed:
1. A control circuit (100) for controlling switching elements of a switched-mode power supply (10), the control circuit comprising:
   a control input (112), for receiving a pulse width modulated, PWM, control signal comprising a series of control pulses;
   a primary output (120), for controlling a primary switching element of the switched-mode power supply; and
   control logic (110) configured to generate, based on the received PWM control signal, a primary PWM control signal, comprising a series of primary pulses, at the primary output (120),
   wherein the primary PWM control signal is generated such that the primary pulses are timed between the control pulses.
2. The control circuit (100) of embodiment 1, further comprising a secondary output (130), for controlling a secondary switching element (200) of the switched-mode power supply,
   wherein the control logic (110) is further configured to generate, based on the received PWM control signal, a secondary PWM control signal at the secondary output (130),
   wherein the primary PWM control signal and the secondary PWM control signal are generated such that
   the primary switching element is controlled to be off if the secondary switching element (200) is on, and
   the secondary switching element (200) is controlled to be off if the primary switching element is on.
3. The control circuit (100) of embodiment 1 or embodiment 2, wherein the control logic (110) comprises inversion logic (142), configured to invert the PWM control signal to generate an inverted PWM control signal, wherein the primary PWM control signal is generated based on the inverted PWM control signal.
4. The control circuit (100) of embodiment 3, wherein the inverted PWM control signal comprises a series of pulses, each pulse having a leading edge and a trailing edge, and wherein the control logic (110) comprises primary delay logic (144), configured to delay the leading edge of each pulse in the inverted PWM control signal by a defined primary delay time, thereby to generate the primary pulses.
5. The control circuit (100) of embodiment 4, wherein each control pulse of the PWM control signal has a leading edge and a trailing edge, wherein the secondary PWM control signal comprises a series of secondary pulses, each secondary pulse corresponding to a respective control pulse, and wherein the control logic (110) comprises secondary delay logic (146), configured to delay the leading edge of each control pulse in the PWM control signal by a defined secondary delay time, thereby to generate the secondary pulses.
6. The control circuit (100) of embodiment 5, comprising a sensing terminal (116) configured to sense an electrical characteristic,
   wherein the control logic (110) is configured to set one or both of the primary delay time and the secondary delay time responsive to the sensed electrical characteristic.
7. The control circuit (100) of any one of the preceding embodiments, further comprising an over-current protection, OCP, circuit, configured to sense a current switched by the primary switching element,
   wherein the OCP circuit is configured to detect an excessive current condition in which the sensed current exceeds a current protection threshold,
   wherein the control logic (110) is configured to reduce a pulse width of the primary PWM control signal, responsive to the detection of said excessive current condition.
8. The control circuit (100) of embodiment 7, comprising an OCP terminal (116), wherein the control circuit (100) is configured to provide an output signal at the OCP terminal indicative of the detection of said excessive current condition.
9. The control circuit (100) of embodiment 8, wherein the control circuit is configured to receive at the OCP terminal (116) an input signal indicative of an excessive current event,
   wherein the control logic (110) is configured to reduce a pulse width of at least one of the primary PWM control signal and the secondary PWM control signal, responsive to said received input signal.
10. The control circuit (100) of embodiment 8 or embodiment 9, wherein the OCP terminal is a sensing/OCP terminal (116) configured to sense an electrical characteristic upon initialisation of the control circuit,
   wherein the control logic (110) comprises inversion logic (142), configured to invert the PWM control signal to generate an inverted PWM control signal, wherein the primary PWM control signal is generated based on the inverted PWM control signal,
   wherein the inverted PWM control signal comprises a series of pulses, each pulse having a leading edge and a trailing edge, and wherein the control logic (110) comprises primary delay logic (144), configured to delay the leading edge of each pulse in the inverted PWM control signal by a defined primary delay time, thereby to generate the primary pulses,
   wherein the control logic (110) is configured to set the primary delay time responsive to the sensed electrical characteristic,
   and wherein, after said initialisation, the control circuit (100) is configured to provide a signal at the sensing/OCP terminal (116) indicative of the detection of said excessive current condition.
11. A synchronous rectifier module (SR) comprising:
   a controlled switching element (200), having a control terminal; and
   a control circuit (100) according to embodiment 2,
   wherein the secondary output (130) of the control circuit (100) is coupled to control the control terminal of the controlled switching element (200).
12. The synchronous rectifier module (SR) of embodiment 11, wherein the controlled switching element (200) and the control circuit (100) are packaged together in a common package.
13. The synchronous rectifier module of embodiment 12, wherein the primary PWM control signal is provided at an output of the package.
14. A switched mode power supply comprising:
   a first synchronous rectifier module (SR1) according to any one of embodiments 11 to 13; and
   a controller (1000) configured to provide a first PWM control signal to the first synchronous rectifier module (SR1).
15 The switched mode power supply of embodiment 14, further comprising a second synchronous rectifier module (SR2) according to any one of embodiments 11 to 13,
   wherein the controller (1000) is further configured to provide a second PWM control signal to the second synchronous rectifier module (SR2).
16. The switched mode power supply of embodiment 15, further comprising:
   a first primary switching element (22); and
   a second primary switching element (12),
   wherein the primary PWM control signal of the first synchronous rectifier module (SR1) is coupled to control a control terminal of the first primary switching element (22) and
   the primary PWM control signal of the second synchronous rectifier module (SR2) is coupled to control a control terminal of the second primary switching element (12).
17. The switched mode power supply of embodiment 15, further comprising:
   a first primary switching element (22);
   a second primary switching element (12);
   a third synchronous rectifier module (SR3) according to any one of embodiments 11 to 13; and
   a fourth synchronous rectifier module (SR4) according to any one of embodiments 11 to 13,
   wherein the controller (1000) is configured to provide the first PWM control signal to the fourth synchronous rectifier module (SR4) and the second PWM control signal to the third synchronous rectifier module (SR3),
   wherein the primary PWM control signal of one of the first synchronous rectifier module (SR1) and the fourth synchronous rectifier module (SR4) is coupled to control a control terminal of the first primary switching element (22) and
   the primary PWM control signal of one of the second synchronous rectifier module (SR2) and the third synchronous rectifier module (SR3) is coupled to control a control terminal of the second primary switching element (12).
18 The switched mode power supply of embodiment 16 or embodiment 17, further comprising a first transformer (16), and wherein:
   the first primary switching element (22) and the second primary switching element (12) are connected in series at a switching node;
   the switching node is coupled to a primary winding of the first transformer (16);
   the first synchronous rectifier module (SR1) is coupled to a first end of a secondary winding of the first transformer;
   the second synchronous rectifier module (SR2) is coupled to a second end of the secondary winding of the first transformer; and
   the secondary winding of the first transformer (16) has a centre tap, configured to be coupled to a load (R_{L}).
19 The switched mode power supply of embodiment 17, further comprising a first transformer (16) and a second transformer (26), and wherein:
   the first primary switching element (22) and the second primary switching element (12) are connected in series at a switching node;
   the switching node is coupled to a primary winding of the first transformer (16);
   a primary winding of the second transformer (26) is in series with the primary winding of the first transformer (16);
   the first synchronous rectifier module (SR1) is coupled to a first end of a secondary winding of the first transformer (16);
   the second synchronous rectifier module (SR2) is coupled to a second end of the secondary winding of the first transformer (16); and
   the secondary winding of the first transformer (16) has a centre tap, configured to be coupled to a load (R_{L}),
   the fourth synchronous rectifier module (SR4) is coupled to a first end of a secondary winding of the second transformer (26);
   the third synchronous rectifier module (SR3) is coupled to a second end of the secondary winding of the second transformer (26); and
   the secondary winding of the second transformer (26) has a centre tap, coupled to the centre tap of the first transformer (16).
20. The switched mode power supply of any one of embodiments 14 to 19, wherein the controller (1000) is configured to generate the first PWM control signal and the second PWM control signal with a 180° phase-shift between them.
21. The switched mode power supply of any one of embodiments 14 to 20, forming a half bridge current doubler, HBCD, circuit.

## Claims

1. A control circuit (100) for controlling switching elements of a switched-mode power supply (10), the control circuit comprising:
a control input (112), for receiving a pulse width modulated, PWM, control signal comprising a series of control pulses;
a primary output (120), for controlling a primary switching element of the switched-mode power supply; and
control logic (110) configured to generate, based on the received PWM control signal, a primary PWM control signal, comprising a series of primary pulses, at the primary output (120),
wherein the primary PWM control signal is generated such that the primary pulses are timed between the control pulses.

2. The control circuit (100) of claim 1, further comprising a secondary output (130), for controlling a secondary switching element (200) of the switched-mode power supply,
wherein the control logic (110) is further configured to generate, based on the received PWM control signal, a secondary PWM control signal at the secondary output (130),
wherein the primary PWM control signal and the secondary PWM control signal are generated such that
the primary switching element is controlled to be off if the secondary switching element (200) is on, and
the secondary switching element (200) is controlled to be off if the primary switching element is on.

3. The control circuit (100) of claim 1 or claim 2, wherein the control logic (110) comprises inversion logic (142), configured to invert the PWM control signal to generate an inverted PWM control signal, wherein the primary PWM control signal is generated based on the inverted PWM control signal.

4. The control circuit (100) of claim 3, wherein the inverted PWM control signal comprises a series of pulses, each pulse having a leading edge and a trailing edge, and wherein the control logic (110) comprises primary delay logic (144), configured to delay the leading edge of each pulse in the inverted PWM control signal by a defined primary delay time, thereby to generate the primary pulses.

5. The control circuit (100) of claim 4, wherein each control pulse of the PWM control signal has a leading edge and a trailing edge, wherein the secondary PWM control signal comprises a series of secondary pulses, each secondary pulse corresponding to a respective control pulse, and wherein the control logic (110) comprises secondary delay logic (146), configured to delay the leading edge of each control pulse in the PWM control signal by a defined secondary delay time, thereby to generate the secondary pulses.

6. The control circuit (100) of claim 5, comprising a sensing terminal (116) configured to sense an electrical characteristic,
wherein the control logic (110) is configured to set one or both of the primary delay time and the secondary delay time responsive to the sensed electrical characteristic.

7. The control circuit (100) of any one of the preceding claims, further comprising an over-current protection, OCP, circuit, configured to sense a current switched by the primary switching element,
wherein the OCP circuit is configured to detect an excessive current condition in which the sensed current exceeds a current protection threshold,
wherein the control logic (110) is configured to reduce a pulse width of the primary PWM control signal, responsive to the detection of said excessive current condition.

8. The control circuit (100) of claim 7, comprising an OCP terminal (116), wherein the control circuit (100) is configured to provide an output signal at the OCP terminal indicative of the detection of said excessive current condition,
wherein the control circuit is configured to receive at the OCP terminal (116) an input signal indicative of an excessive current event,
wherein the control logic (110) is configured to reduce a pulse width of at least one of the primary PWM control signal and the secondary PWM control signal, responsive to said received input signal.

9. A synchronous rectifier module (SR) comprising:
a controlled switching element (200), having a control terminal; and
a control circuit (100) according to claim 2,
wherein the secondary output (130) of the control circuit (100) is coupled to control the control terminal of the controlled switching element (200).

10. A switched mode power supply comprising:
a first synchronous rectifier module (SR1) according to claim 9; and
a controller (1000) configured to provide a first PWM control signal to the first synchronous rectifier module (SR1).

11. The switched mode power supply of claim 10, further comprising a second synchronous rectifier module (SR2) according to claim 9,
wherein the controller (1000) is further configured to provide a second PWM control signal to the second synchronous rectifier module (SR2).

12. The switched mode power supply of claim 11, further comprising:
a first primary switching element (22); and
a second primary switching element (12),
wherein the primary PWM control signal of the first synchronous rectifier module (SR1) is coupled to control a control terminal of the first primary switching element (22) and
the primary PWM control signal of the second synchronous rectifier module (SR2) is coupled to control a control terminal of the second primary switching element (12).

13. The switched mode power supply of claim 11, further comprising:
a first primary switching element (22);
a second primary switching element (12);
a third synchronous rectifier module (SR3) according to claim 9; and
a fourth synchronous rectifier module (SR4) according to claim 9,
wherein the controller (1000) is configured to provide the first PWM control signal to the fourth synchronous rectifier module (SR4) and the second PWM control signal to the third synchronous rectifier module (SR3),
wherein the primary PWM control signal of one of the first synchronous rectifier module (SR1) and the fourth synchronous rectifier module (SR4) is coupled to control a control terminal of the first primary switching element (22) and
the primary PWM control signal of one of the second synchronous rectifier module (SR2) and the third synchronous rectifier module (SR3) is coupled to control a control terminal of the second primary switching element (12).

14. The switched mode power supply of claim 12 or claim 13, further comprising a first transformer (16), and wherein:
the first primary switching element (22) and the second primary switching element (12) are connected in series at a switching node;
the switching node is coupled to a primary winding of the first transformer (16);
the first synchronous rectifier module (SR1) is coupled to a first end of a secondary winding of the first transformer;
the second synchronous rectifier module (SR2) is coupled to a second end of the secondary winding of the first transformer; and
the secondary winding of the first transformer (16) has a centre tap, configured to be coupled to a load (R_{L}).

15. The switched mode power supply of claim 13, further comprising a first transformer (16) and a second transformer (26), and wherein:
the first primary switching element (22) and the second primary switching element (12) are connected in series at a switching node;
the switching node is coupled to a primary winding of the first transformer (16);
a primary winding of the second transformer (26) is in series with the primary winding of the first transformer (16);
the first synchronous rectifier module (SR1) is coupled to a first end of a secondary winding of the first transformer (16);
the second synchronous rectifier module (SR2) is coupled to a second end of the secondary winding of the first transformer (16); and
the secondary winding of the first transformer (16) has a centre tap, configured to be coupled to a load (R_{L}),
the fourth synchronous rectifier module (SR4) is coupled to a first end of a secondary winding of the second transformer (26);
the third synchronous rectifier module (SR3) is coupled to a second end of the secondary winding of the second transformer (26); and
the secondary winding of the second transformer (26) has a centre tap, coupled to the centre tap of the first transformer (16).

## Amended claims

### Amended claims in accordance with Rule 137(2) EPC.

1. A synchronous rectifier module (SR) for a switched-mode power supply (10), the synchronous rectifier module comprising:
a controlled switching element (200), having a control terminal; and
a control circuit (100) for controlling switching elements of the switched-mode power supply (10), the control circuit comprising:
a control input (112), for receiving a pulse width modulated, PWM, control signal comprising a series of control pulses;
a primary output (120), for controlling a primary switching element of the switched-mode power supply; and
control logic (110) configured to generate, based on the received PWM control signal, a primary PWM control signal, comprising a series of primary pulses, at the primary output (120),
wherein the primary PWM control signal is generated such that the primary pulses are timed between the control pulses,
the control circuit (100) further comprising a secondary output (130), for controlling a secondary switching element (200) of the switched-mode power supply,
wherein the control logic (110) is further configured to generate, based on the received PWM control signal, a secondary PWM control signal at the secondary output (130),
wherein the primary PWM control signal and the secondary PWM control signal are generated such that
the primary switching element is controlled to be off if the secondary switching element (200) is on, and
the secondary switching element (200) is controlled to be off if the primary switching element is on,
wherein the secondary output (130) of the control circuit (100) is coupled to control the control terminal of the controlled switching element (200).

2. The synchronous rectifier module (SR) of claim 1, wherein the control logic (110) comprises inversion logic (142), configured to invert the PWM control signal to generate an inverted PWM control signal, wherein the primary PWM control signal is generated based on the inverted PWM control signal.

3. The synchronous rectifier module (SR) of claim 2, wherein the inverted PWM control signal comprises a series of pulses, each pulse having a leading edge and a trailing edge, and wherein the control logic (110) comprises primary delay logic (144), configured to delay the leading edge of each pulse in the inverted PWM control signal by a defined primary delay time, thereby to generate the primary pulses.

4. The synchronous rectifier module (SR) of claim 3, wherein each control pulse of the PWM control signal has a leading edge and a trailing edge, wherein the secondary PWM control signal comprises a series of secondary pulses, each secondary pulse corresponding to a respective control pulse, and wherein the control logic (110) comprises secondary delay logic (146), configured to delay the leading edge of each control pulse in the PWM control signal by a defined secondary delay time, thereby to generate the secondary pulses.

5. The synchronous rectifier module (SR) of claim 4, wherein the control circuit comprises a sensing terminal (116) configured to sense an electrical characteristic,
wherein the control logic (110) is configured to set one or both of the primary delay time and the secondary delay time responsive to the sensed electrical characteristic.

6. The synchronous rectifier module (SR) of any one of the preceding claims, wherein the control circuit further comprises an over-current protection, OCP, circuit, configured to sense a current switched by the primary switching element,
wherein the OCP circuit is configured to detect an excessive current condition in which the sensed current exceeds a current protection threshold,
wherein the control logic (110) is configured to reduce a pulse width of the primary PWM control signal, responsive to the detection of said excessive current condition.

7. The synchronous rectifier module (SR) of claim 6, wherein the control circuit comprises an OCP terminal (116), wherein the control circuit (100) is configured to provide an output signal at the OCP terminal indicative of the detection of said excessive current condition,
wherein the control circuit is configured to receive at the OCP terminal (116) an input signal indicative of an excessive current event,
wherein the control logic (110) is configured to reduce a pulse width of at least one of the primary PWM control signal and the secondary PWM control signal, responsive to said received input signal.

8. A switched mode power supply comprising:
a first synchronous rectifier module (SR1) according to any one of the preceding claims; and
a controller (1000) configured to provide a first PWM control signal to the first synchronous rectifier module (SR1).

9. The switched mode power supply of claim 8, further comprising a second synchronous rectifier module (SR2) according to any one of claims 1 to 7,
wherein the controller (1000) is further configured to provide a second PWM control signal to the second synchronous rectifier module (SR2).

10. The switched mode power supply of claim 9, further comprising:
a first primary switching element (22); and
a second primary switching element (12),
wherein the primary PWM control signal of the first synchronous rectifier module (SR1) is coupled to control a control terminal of the first primary switching element (22) and
the primary PWM control signal of the second synchronous rectifier module (SR2) is coupled to control a control terminal of the second primary switching element (12).

11. The switched mode power supply of claim 9, further comprising:
a first primary switching element (22);
a second primary switching element (12);
a third synchronous rectifier module (SR3) according to any one of claims 1 to 7; and
a fourth synchronous rectifier module (SR4) according to any one of claims 1 to 7,
wherein the controller (1000) is configured to provide the first PWM control signal to the fourth synchronous rectifier module (SR4) and the second PWM control signal to the third synchronous rectifier module (SR3),
wherein the primary PWM control signal of one of the first synchronous rectifier module (SR1) and the fourth synchronous rectifier module (SR4) is coupled to control a control terminal of the first primary switching element (22) and
the primary PWM control signal of one of the second synchronous rectifier module (SR2) and the third synchronous rectifier module (SR3) is coupled to control a control terminal of the second primary switching element (12).

12. The switched mode power supply of claim 10 or claim 11, further comprising a first transformer (16), and wherein:
the first primary switching element (22) and the second primary switching element (12) are connected in series at a switching node;
the switching node is coupled to a primary winding of the first transformer (16);
the first synchronous rectifier module (SR1) is coupled to a first end of a secondary winding of the first transformer;
the second synchronous rectifier module (SR2) is coupled to a second end of the secondary winding of the first transformer; and
the secondary winding of the first transformer (16) has a centre tap, configured to be coupled to a load (R_{L}).

13. The switched mode power supply of claim 11, further comprising a first transformer (16) and a second transformer (26), and wherein:
the first primary switching element (22) and the second primary switching element (12) are connected in series at a switching node;
the switching node is coupled to a primary winding of the first transformer (16);
a primary winding of the second transformer (26) is in series with the primary winding of the first transformer (16);
the first synchronous rectifier module (SR1) is coupled to a first end of a secondary winding of the first transformer (16);
the second synchronous rectifier module (SR2) is coupled to a second end of the secondary winding of the first transformer (16); and
the secondary winding of the first transformer (16) has a centre tap, configured to be coupled to a load (R_{L}),
the fourth synchronous rectifier module (SR4) is coupled to a first end of a secondary winding of the second transformer (26);
the third synchronous rectifier module (SR3) is coupled to a second end of the secondary winding of the second transformer (26); and
the secondary winding of the second transformer (26) has a centre tap, coupled to the centre tap of the first transformer (16).
